# EUROPEAN PATENT APPLICATION

(11) **EP 4 650 991 A1**
(43) Date of publication of application: **19.11.2025**
(21) Application number: 24175872.1
(22) Date of filing: 15.05.2024
(51) Int. Cl.: G06F 18/214, G06F 18/24, G06V 40/20, G06F 18/2131, G01S 7/41, G06F 123/02

(54) **DATA AUGMENTATION FOR OBJECT-SPECIFIC KINEMATIC OBSERVABLES OBTAINED FROM RADAR MEASUREMENT DATA**

(71) Applicant: Infineon Technologies AG, 85579 Neubiberg (DE)
(72) Inventor: FUSCO, Alessandra, 81541 Munich (DE); ZAMAN, Zain Amir, 81549 Munich (DE)
(74) Representative: Kraus & Lederer PartGmbB

(57) **Abstract**

Various examples of the disclosure generally pertain to providing estimations such as class estimations, e.g., gesture class estimations, based on radar measurements and using a machine-learning model. Various examples specifically relate aspects associated with the training of such a machine-learning model. Data augmentation techniques are for populating a training dataset. Data augmentation is executed for values of object-specific observables such as range (601) or velocity (604).

## Description

### TECHNICAL FIELD

Various examples of the disclosure generally pertain to providing estimations such as class estimations, e.g., gesture class estimations, based on radar measurements and using a machine-learning model. Various examples specifically relate aspects associated with the training of such a machine-learning model.

### BACKGROUND

Radar sensors are used in various use cases and application scenarios. For instance, gesture class estimation may be employed in human machine interfaces (HMIs). For instance, hand or finger gestures can be recognized and classified. Gesture classification finds applications in smartphones, sign language interfaces, automotive infotainment systems, augmented or virtual reality systems and smart appliances. Further, gesture classification can facilitate HMI for vending and ticketing machines at public places.

Radar measurement data may be processed using machine-learning (ML) models. ML models may be trained to provide certain estimations. The estimation can solve a certain regression or classification task. An example of a classification task is a gesture-class estimation. An example ML model used for determining gesture-class estimations is disclosed in EP 4 134 924, but many other implementations are available.

It has been observed that the quality of the ML model sometimes varies, e.g., depending on the particular estimation task or the deployment scenario. Sometimes, wrong estimations - e.g., wrong classifications - are observed. The accuracy of the estimation is poor.

### SUMMARY

Accordingly, a need exists for ML models providing improved accuracy in the estimation based on radar measurement data.

This need is met by the features of the independent claims. The features of the dependent claims define embodiments.

A computer-implemented method of populating a training dataset is disclosed. The training dataset is for training a machine-learning model. The machine-learning model is trained to provide estimations associated with at least one object. The method includes obtaining a predetermined input sample. The predetermined input sample includes one or more sets of time-resolved values for one or more observables of the at least one object. Each set of the time-resolved values is determined based on radar measurement data acquired by a radar sensor for a scene. The scene includes the at least one object. Each observable is associated with a spatial configuration of the at least one object. The method includes generating a further input sample based on the predetermined input sample through applying a transformation over a time interval of at least one of the one or more sets of the time-resolved values of the predetermined input sample. By applying the transformation, the respective time-resolved values over the time interval are altered. The method also includes adding the further input sample to the training dataset.

A training dataset for training a machine-learning model to provide class estimations associated with at least one object is disclosed. The training dataset is populated based on such method.

A computing device that includes a computing circuitry for populating a training dataset is disclosed. The training dataset is for training a machine-learning model. The machine-learning model is trained to provide estimations associated with at least one object. The computing circuitry is configured to obtain a predetermined input sample. The predetermined input sample includes one or more sets of time-resolved values for one or more observables of the at least one object. Each set of the time-resolved values is determined based on radar measurement data acquired by a radar sensor for a scene. The scene includes the at least one object. Each observable is associated with a spatial configuration of the at least one object. The computing circuitry is configured to generate a further input sample based on the predetermined input sample through applying a transformation over a time interval of at least one of the one or more sets of the time-resolved values of the predetermined input sample. By applying the transformation, the respective time-resolved values over the time interval are altered. The computing circuitry is configured to add the further input sample to the training dataset.

A computer program including program code that can be executed by a processor of a computing device is disclosed. The processor, upon executing the program code, performs a method of populating a training dataset is disclosed. The training dataset is for training a machine-learning model. The machine-learning model is trained to provide estimations associated with at least one object. The method includes obtaining a predetermined input sample. The predetermined input sample includes one or more sets of time-resolved values for one or more observables of the at least one object. Each set of the time-resolved values is determined based on radar measurement data acquired by a radar sensor for a scene. The scene includes the at least one object. Each observable is associated with a spatial configuration of the at least one object. The method includes generating a further input sample based on the predetermined input sample through applying a transformation over a time interval of at least one of the one or more sets of the time-resolved values of the predetermined input sample. By applying the transformation, the respective time-resolved values over the time interval are altered. The method also includes adding the further input sample to the training dataset.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a system including a radar sensor and a processing device according to various examples.
FIG. 2 schematically illustrates details with respect to the radar sensor.
FIG. 3 schematically illustrates radar measurement data in the form of a raw data frame obtained from a radar sensor according to various examples.
FIG. 4 schematically illustrates a set of time-resolved values for a range observable of an object, the set of time-resolved values being extracted from radar measurement data according to various examples.
FIG. 5 schematically illustrates multiple gesture classes amongst which an ML model can discriminate according to various examples.
FIG. 6 illustrates multiple sets of time resolved values for a range observable, a velocity observable, and azimuthal observable, and an elevation observable for a "circle clockwise" hand gesture according to various examples.
FIG. 7 schematically illustrates multiple sets of time-resolved values for the range observable, the velocity observable, the azimuthal observable, and the elevation observable for a "finger-rub" hand gesture according to various examples.
FIG. 8 schematically illustrates the processing of radar measurement data to obtain sets of time-resolved values for multiple observables for each object in the scene.
FIG. 9 is a flowchart of a method according to various examples.
FIG. 10 illustrates an amplitude-scaling operation of a transformation according to various examples.
FIG. 11 illustrates a time-scaling operation of a transformation according to various examples.
FIG. 12 illustrates a noise-injection operation of the transformation according to various examples.
FIG. 13 illustrates shifting operations of the transformation according to various examples.
FIG. 14 illustrates multiple deployment configurations of a radar sensor according to various examples.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, examples of the disclosure will be described in detail with reference to the accompanying drawings. It is to be understood that the following description of examples is not to be taken in a limiting sense. The scope of the disclosure is not intended to be limited by the examples described hereinafter or by the drawings, which are taken to be illustrative only.

The drawings are not to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connections or coupling. A coupling between components may also be established over a wireless connection. Functional blocks may be implemented in hardware, firmware, software, or a combination thereof.

Hereinafter, techniques of ML-model-based processing of radar measurement data are disclosed. Various use cases and applications can be benefit to the disclosed techniques. For instance, an ML model may be used for solving a classification task or a regression task. For instance, an ML model may be used for providing gesture class estimations, people counting estimations, vital sign monitoring estimations, to give just a few examples. Hereinafter, techniques will be primarily discussed in the context of providing gesture class estimations, for illustrative purposes. However, the techniques disclosed herein may be readily applied to other use cases and applications.

Various examples of the disclosure generally relate to gesture classification. In particular, using the techniques described herein, hand gestures or finger gestures or gestures performed using a handheld object can be recognized. Such object can perform the gesture in free space. I.e., the gesture may be defined by a 3-D motion of the object, e.g., along a trajectory and/or including self-rotation. It would also be possible to recognize other kinds and types of gestures, e.g., body-pose gestures or facial expression gestures. In detail, gesture classification can used to estimate a gesture class. For example, there can be a predefined set of gesture classes. Then, once such an object performs a gesture, it can be judged whether this gesture is part of one of the gesture classes.

Various techniques disclosed herein employ a radar measurement of a scene including an object - e.g., a hand or finger or handheld object such as a stylus or beacon - to acquire data based on which the gesture classification can be implemented. Sometimes, the scene may include multiple objects. The multiple objects may also be associated with the gesture, e.g., a two-finger pinching gesture would be an example. Some objects may also refer to background.

For instance, a short-range radar measurement could be implemented. Here, radar chirps can be used to measure a position of one or more objects in a scene having extents of tens of centimeters or meters. According to the various examples disclosed herein, a millimeter-wave radar sensor may be used to perform the radar measurement; the radar sensor operates as a frequency-modulated continuous-wave radar that includes a millimeter-wave radar sensor circuit, one or more transmitters, and one or more receivers. A millimeter-wave radar sensor may transmit and receive signals in the 20 GHz to 122 GHz range. Alternatively, frequencies outside of this range, such as frequencies between 1 GHz and 20 GHz, or frequencies between 122 GHz and 300 GHz, may also be used. As a general rule, a radar sensor can transmit a plurality of radar pulses, such as chirps, towards a scene. This refers to a pulsed operation. In some embodiments the chirps are linear chirps, i.e., the instantaneous frequency of the chirps varies linearly with time. A Doppler frequency shift can be used to determine a velocity of the target.

According to the various examples, various kinds and types of ML models may be employed. An example implementation of the ML model is an artificial deep neural network (NN). An NN generally includes a plurality of nodes that can be arranged in multiple layers. Nodes of given layer are connected with one or more nodes of a subsequent layer. Skip connections between non-adjacent layers are also possible. Generally, connections are also referred to as edges. The output of each node can be computed based on the values of each one of the one or more nodes connected to the input. Nonlinear calculations are possible. Different layers can perform different transformations such as, e.g., pooling, max-pooling, weighted or unweighted summing, non-linear activation, convolution, etc. The NN can include multiple hidden layers, arranged between an input layer and an output layer. There can be a spatial contraction and a spatial expansion implemented by one or more encoder branches and one or more decoder branches, respectively. I.e., the x-y-resolution of the input data and the output data may be decreased (increased) from layer to layer along the one or more encoder branches (decoder branches). The encoder branch provides a contraction of the input sample, and the decoder branch provides an expansion. The calculation performed by the nodes are set by respective weights associated with the nodes. The weights can be determined in a training of the NN. In the training, a numerical optimization can be used to set the weights. A loss function can be defined between an output of the NN in its current training can then minimize the loss function. For this, a gradient descent technique may be employed where weights are adjusted from back-to-front of the NN. Some example NN that can be used in accordance with the disclosed techniques are disclosed in: US2023068523 A; US2021325509 A; US2019302253 A; US2022404486 A. The particular type or architecture of the ML model is not germane for the techniques disclosed herein; the techniques disclosed herein can flexible handle various types and architectures of the ML model.

According to examples, the ML model operates based on input samples that are obtained by a pre-processing radar measurement data that is acquired by a radar sensor (sometimes referred to as raw data). Thus, the ML model does not operate directly based on the raw data output by the radar sensor; some intermediate pre-processing is employed to obtain input data suitable for being processed by the ML model.

Typically, radar measurement data is constituted by a sequence of data frames. A data frame may be structured into fast-time dimension, slow-time dimension and antenna channels. The data frame includes data samples over a certain sampling time for multiple radar pulses, specifically chirps. Slow time is incremented from chirp-to-chirp; fast time is incremented for subsequent samples. For instance, a 2-D Fast Fourier Transformation (FFT) of a data frame along fast-time and slow-time dimension yields a range-doppler image (RDI).

The radar measurement data generally includes a superposition of information for multiple objects and background of the scene. The radar measurement data also includes noise or clutter. Thus, the radar measurement data includes entangled information for multiple objects, background, noise etc.

By means of appropriate pre-processing it is possible to disentangle the radar measurement data to obtain information for individual ones of the multiple objects. For instance, at least a part of the RDI can be calculated and then a specific range bin can be selected. This range bin corresponds to an individual object.

More generally, it is possible - by applying one or more respective filters that are generally known in the art - to extract one or more observables associated with a respective object, each observable being associated with a spatial configuration of that respective object. These observables being associated with or specifying the spatial configuration of the object can be termed kinematic observable or positional observable.

For instance, each kinematic observable may correspond to one of the following: range, velocity, azimuthal position or angle, elevation position or angle, or magnitude. The magnitude may be defined as the average amplitude of signals from all receiver channels. For instance, position (e.g., defined in 3-D space by the range, elevation and azimuthal positions), velocity and acceleration all define the kinematics of an object and are inter-related through integration / differentiation, i.e., the equations of motion. Note that, e.g., the position observable may at a certain moment of time have a value of zero, even if the velocity, at that moment in time, has a non-zero value (or vice versa). For instance, the mean or maximum range and/or mean or maximum velocity/Doppler shift of at least a part of an RDI can be extracted. This yields the range and velocity (as mean of maximum value, or as intensity vector) as kinematic observables for a certain point in time associated with the sampling time of the data frame. It is also possible to apply beamforming to the radar measurement data to determine the mean / maximum elevation angle or azimuthal angle. This yields the elevation angle/position and azimuth angle/position (as mean or maximum value, or as intensity vector) as kinematic observables. As a general rule, the techniques to extract values of a kinematic observable from data frames of a radar measurement data are known to the skilled person and may be employed in the present context.

As will be appreciated from the above, the one or more kinematic observables are defined at object-level, i.e., respective values of kinematic observables can be obtained separately for each of one or more objects in a scene. Different objects exhibit different values of the same kinematic observables, e.g., different range values or different velocity values. Thus, the object-level kinematics observables are different than the raw data which encompasses various data types in entangled form, capturing multiple objects and also background and clutter. Each kinematics observable uniquely characterizes/corresponds to one physical property of the object which is observed, here a property of the position or movement of the object.

Next, aspects with respect to time resolution are discussed. The time-dependency of these values may differ from object to object. By appropriately pre-processing the radar measurement data including a sequence of data frames, it is possible to obtain sets of time-resolved values for each of multiple kinematic observables. In other words, it is possible to obtain a profile / curve of each kinematic observable over time. The change of one or more spatial characteristics as a function of time is tracked by the time-resolved values of the one or more kinematic observables.

Thus, summarizing, rather than providing, as input samples to the ML model, raw data frames associated with an entire scene, the pre-processing can extract the values of one or more kinematic observables for the objects. This can be done at a time resolution, so that for each kinematic observable a respective set of time-resolved values (each value being associated with a respective point in time) is obtained. It has been found that such object-level input data to the ML generally allows to increase the estimation accuracy of the ML (if compared to an end-to-end solution in which the input to the ML model are radar measurement frames). For instance, noise and clutter has a reduced impact. Heuristic filtering becomes possible, ensuring data quality of the input to the ML model.

For enabling the training of the ML model, a training dataset is determined that includes multiple pairs of input-output samples. The output samples constitute ground truth, i.e., defining the intended estimation of the ML model for the given input sample. The input samples in the training datasets are matched in information content and structure to the input samples expected during inference, i.e., are preprocessed based on radar measurement data similar to the preprocessing in the field deployment.

The training dataset can be generated based on an experimental dataset that is obtained from measurements. For instance, the experimental data set may be constructed based on lab measurements or a measurement campaign on the lab circumstances (as opposed to field-deployed agents for inference).

Various techniques are based on the finding that the estimation accuracy of the ML model can benefit tailored training datasets. Specifically, to enable reliable and accurate inference, it is helpful to execute the training of the ML model based on a training dataset that includes pairs of input-output samples that mimic the deployment configuration of the radar sensor expected during inference. This prevents that the ML model is confronted with "unseen" input samples during inference. Such "unseen input samples" have a significant distance, in the space of input samples, to any input sample of the training dataset based on which the ML model has been trained. This problem is sometimes referred to as covariate shift in the literature. Covariate shift occurs when the input samples used during the training of a ML model have a different distribution from the input samples seen during inference. This discrepancy can lead to poor performance since the ML model was trained on a training dataset that is not representative of the conditions encountered during inference. To give a concrete example: if a radar sensor is to be positioned within the dashboard of a vehicle at a certain position, then the distance between the radar sensor and the region in which the user executes a hand gesture is defined by the system integration, e.g., by the mounting position and installation space, etc. For another vehicle, the distance may be different. The accuracy of the gesture class estimation obtained from the ML model depends on whether the training dataset based on which the ML model has been trained included or did not include pairs of input-output samples that are matched to that distance. This similarly applies to other parameters of the deployment configuration such as orientation, background noise, etc.

Ideally, measurement campaigns would be executed for each deployment configuration of the radar sensor. I.e., ideally, the experimental dataset would be comprehensive and thus may be used directly for training. This would avoid any covariate shift; the training datasets would be matched to the deployment configuration, i.e., the input samples encountered during inference. Various techniques are based on the finding that populating training datasets based on measurement campaigns can be time-consuming and costly. For instance, populating a training dataset for a given deployment configuration of a radar sensor based on acquiring, in a test setup, respective input samples and manually annotating labels to obtain the associated output samples, consumes significant resources. For instance, it is required to set up a respective test setup in a lab, validate the test setup, execute a measurement campaign to obtain the input samples, allocate domain experts to annotate the input samples with associated labels defining the output samples, validate the pairs of input-output samples, etc.

Various techniques disclosed herein enable to reduce the resources required for populating a training dataset. At the same time, the techniques disclosed herein enable accurate training of the ML model, i.e., enable the ML model to provide accurate estimations based on the training employing the thus populated training dataset.

According to various examples, a training dataset is populated by altering pre-existing input samples for which output samples are available. For instance, such pre-existing pairs of input - and output samples may be obtained from an experimental dataset.
I.e., a training dataset is populated by digitally postprocessing input samples. Synthetic input samples are determined. This is sometimes referred to as "data augmentation". The techniques include generating a further input sample (the augmented input sample, hereinafter) based on a predefined input sample (the source input sample, hereinafter). The source input sample may be obtained from an experimental training dataset. The augmented input sample is obtained through applying a transformation to time-resolved values of a kinematic observable of the source input sample. Simply speaking, instead of using an experimental dataset for the training directly, the experimental dataset is used as a basis for determining the actual training dataset, using data augmentation.

Thus, generally speaking, according to the disclosed techniques, data augmentation occurs at the level of the kinematic observables - rather than at the level of the radar measurement data, e.g., raw data frames. Kinematic observables are obtained after singulating parts of the radar measurement data for individual objects. According to the disclosed techniques, it is not required to execute data augmentation for data frames that include information for multiple objects and background; instead, data augmentation is executed for the time-resolved values of one or more kinematic observables.

This technique has the benefit of being able to tailor the data augmentation to the deployment configuration of the radar sensor. This is the deployment configuration expected during inference of the ML model. Thus, based on knowledge of the situation encountered by the ML model during inference, the data augmentation can be configured to obtain (synthetic) input samples in the training dataset that are matched to the input samples observed / encountered during inference. For instance, it would be possible to select the transformation from a predetermined group of transformations based on the deployment configuration of the radar sensor. Alternatively or additionally, it would be possible to parametrize the transformation, i.e., set certain parameter values of parameters of the transformation, based on the deployment configuration of the radar sensor. For instance, the deployment configuration can be derived from a specification requirement of the system integration of the radar sensor. For instance, the deployment configuration can be obtained from computer-assisted design data. The deployment configuration may be manually set.

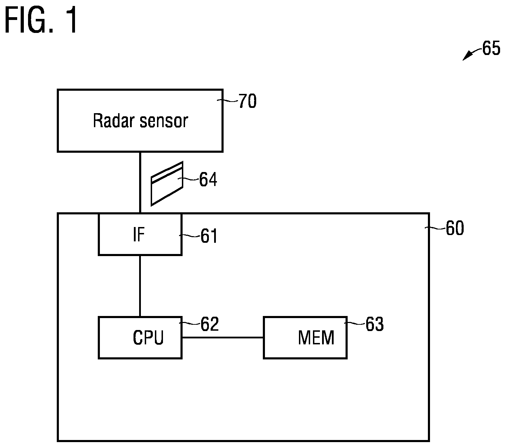

FIG. 1 schematically illustrates a system 65. The system 65 includes a radar sensor 70 and a processing device 60. The processing device 60 can obtain raw radar measurement data 64 - e.g., data frames - from the radar sensor 70.

A processor 62 - e.g., a general-purpose processor (central processing unit, CPU), a field-programmable gated array (FPGA), an application-specific integrated circuit (ASIC) or a low-power embedded compute circuitry - can receive the measurement data 64 via an interface 61 and process the measurement data 64. For instance, the measurement data 64 could include a time sequence of measurement frames, each measurement frame including samples of an ADC converter.

The processor 62 may load program code from a memory 63 and execute the program code. The processor 62 can then perform techniques as disclosed herein, e.g., processing input data using an ML algorithm, making a classification estimation using the ML algorithm, training the ML algorithm, etc. Details with respect to such processing will be explained hereinafter in greater detail; first, however, details with respect to the radar sensor 70 will be explained.

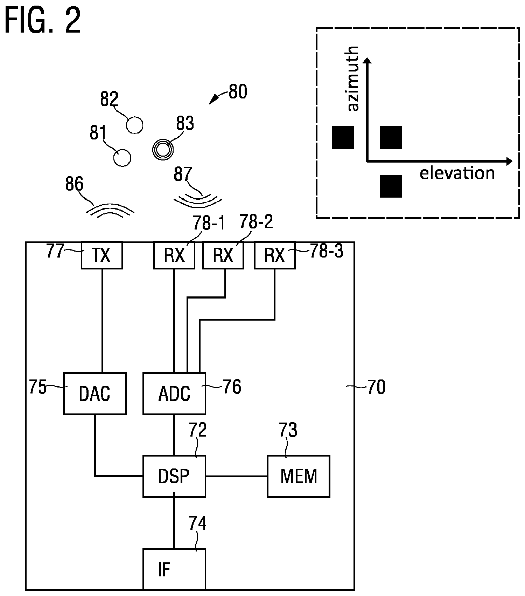

FIG. 2 illustrates aspects with respect to the radar sensor 70. The radar sensor 70 includes a processor 72 (labeled digital signal processor, DSP) that is coupled with a memory 73. Based on program code that is stored in the memory 73, the processor 72 can perform various functions with respect to transmitting radar pulses 86 using a transmit antenna 77 and a digital-to-analog converter (DAC) 75. Once the radar pulses 86 have been reflected by a scene 80, respective reflected radar pulses 87 can be detected by the processor 72 using an ADC 76 and multiple receive antenna 78-1, 78-2, 78-3 (e.g., ordered in a L-shape with half a wavelength distance; see in-set of FIG. 2, so that the phase differences between different pairs of the antennas address azimuthal and elevation angles, respectively). The processor 72 can process raw data samples obtained from the ADC 76 to some larger or smaller degree. In some examples, radar measurement frames (sometimes also referred to as data frames or physical frames) are determined and output.

The radar measurement can be implemented as a basic frequency-modulated continuous wave (FMCW) principle. A frequency chirp can be used to implement the radar pulse 86. A frequency of the chirp can be adjusted between a frequency range of 57 GHz to 64 GHz. The transmitted signal is backscattered and with a time delay corresponding to the distance of the reflecting object captured by all three receiving antennas. The received signal is then mixed with the transmitted signal and afterwards low pass filtered to obtain the intermediate signal. This signal is of significantly lower frequency than that of the transmitted signal and therefore the sampling rate of the ADC 76 can be reduced accordingly. The ADC may work with a sampling frequency of 2 MHz and a 12-bit accuracy.

As illustrated, a scene 80 includes multiple objects 81-83. Each one of these objects 81-83 has a certain distance to the antennas 78-1, 78-2, 78-3 and moves at a certain relative velocity with respect to the sensor 70. These physical quantities define range and Doppler frequency of the radar measurement. The lateral position with respect to the sensor 70 defines the elevation and azimuthal angle.

For instance, the objects 81-83 could pertain to three persons; for people counting applications, the task would be to determine that the scene includes three people. In another example, the objects 81, 82 may correspond to background, whereas the object 83 could pertain to a hand of a user - accordingly, the object 83 may be referred to as target or target object. Based on the radar measurements, e.g., gestures performed by the hand can be recognized. This is only one example of a task solved by a respective processing algorithm. Various types and kinds of target observables can be estimated.

Generally, the radar sensor 70 outputs radar measurement data that includes superimposed signals for all objects in the scene. I.e., filtering to individualize features associated with each of the objects in the scene is not performed at the radar sensor 70.

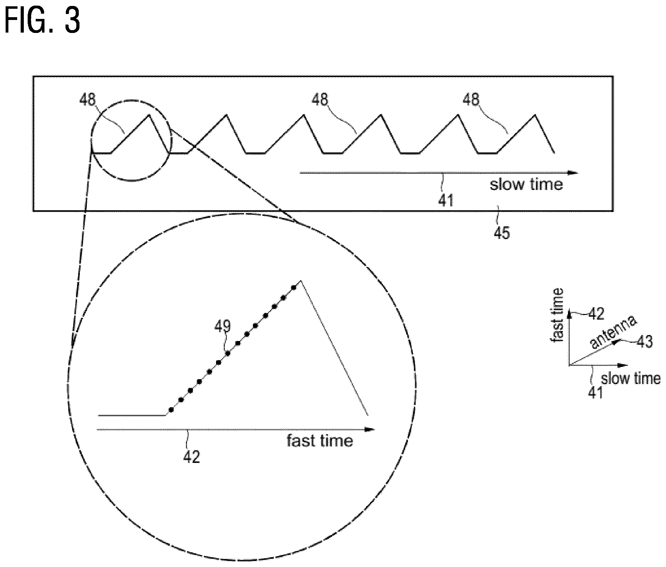

FIG. 3 schematically illustrates aspects with respect to the measurement data 64. FIG. 3 schematically illustrates a structure of raw data in form of a data frame 45. Typically, a data frame 45 is defined by arranging data samples 49 obtained as raw data from the ADC (as explained in connection with FIG. 2) with respect to a fast-time dimension 42 and a slow-time dimension 41 (FIG. 3 is a schematic illustrative drawing; instead of sampling the received signal directly, the ADC samples a processed signal obtained from mixing the transmitted signal with the received signal; this is generally referred to as a Frequency-Modulated Continuous Wave, FMCW, radar measurement). A position along the fast time dimension 42 is incremented for each subsequent readout from the ADC (this is illustrated in the circular inset in FIG. 3), whereas a position along the slow time dimension 41 is incremented with respect to subsequent radar chirps 48. There can be an additional dimension which is the antenna dimension 43 (not illustrated in FIG. 3), which provides angular resolution based on beamforming. For instance, in FIG. 2, an example with three receive channels has been discussed.

The duration of the data frames 45 is typically defined by a measurement protocol. For instance, the measurement protocol can be configured to use 32 chirps within a data frame 45. The chirps repetition time is set to *T*_{PRT} = 0.39 ms, which results in a maximum resolve Doppler velocity of *v*ₘₐₓ = 3.25 ms⁻¹. The frequency of the chirps may range from *f*ₘᵢₙ = 58 GHz to *f*ₘₐₓ = 63 GHz and therefore covers a bandwidth of 8 = 5 GHz. Hence, the range resolution is *Δ*r = 3.0 cm. Each chirp is sampled 64 times with a sampling frequency of 2 MHz resulting in a total observable range of *R*ₘₐₓ = 0.96 m. Typically, the frame repetition frequency may be set to 30 frames per second.

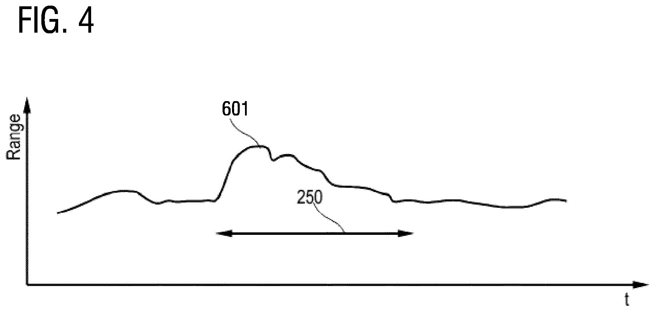

Thus, typically, the duration of the data frames 45 is much shorter than the duration of a gesture (gesture time interval). Accordingly, it can be helpful to aggregate data from multiple subsequent data frames 45 to determine the time interval during which a gesture is executed. This is also shown in FIG. 4.

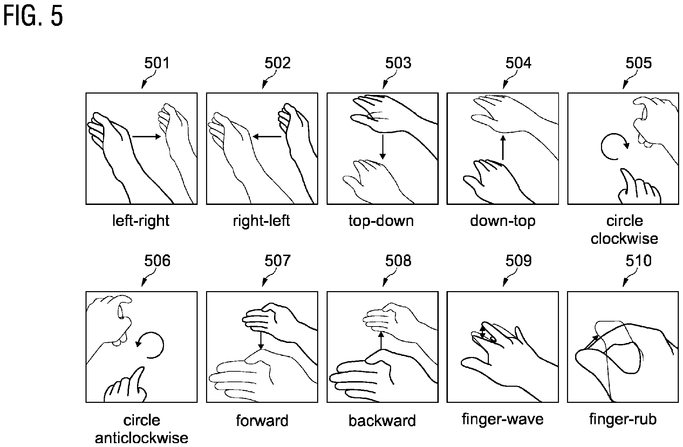

FIG. 4 schematically illustrates the dependency of the time-resolved values for the range 601 (as an example of a kinematic observable) of a given object 83 in the scene on time. A gesture time interval 250 during which a gesture is performed is illustrated. The time-resolved values for the various kinematic observables include characteristic features that enable to provide a robust estimation of the gesture class. Some example gesture classes are shown in FIG. 5.

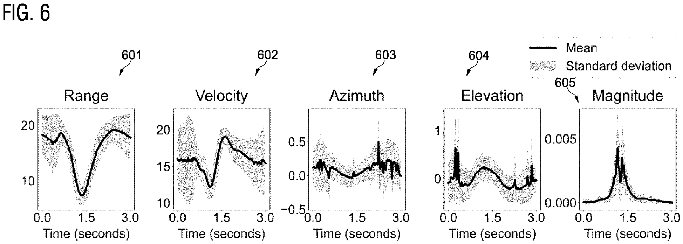

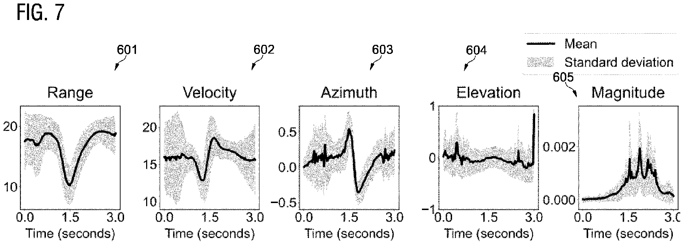

FIG. 5 schematically illustrates various examples gesture classes 501-510 for which a gesture class estimation can be executed. These are only examples. Depending on the particular implementation, more or fewer gesture classes may be subject to the gesture class estimation. Different gesture classes may be subject to the gesture class estimation, e.g., a push gesture for which a hand is pushed towards a certain region. Irrespective of the particular gesture classes of the gesture class estimation task, the gesture classes have varying characteristics of the time-resolved values of kinematic observables such as range, velocity, azimuth, elevation, and magnitude. This is illustrated in FIG. 6 and FIG. 7. FIG. 6 and FIG. 7 illustrates the time resolved values of the kinematic observables range 601 (also cf. FIG. 4), velocity 602, azimuthal angle 603, elevation angle 604, and magnitude 605 respectively. These values are shown for two example examples belonging to different gesture classes; i.e., the push gesture in FIG. 6 and the swipe-left gesture 502 in FIG. 7.

As can be seen from a comparison of FIG. 6 and FIG. 7, the features of the time-resolved values of these kinematic observables 601-604 vary significantly between the two gestures. This is why the ML model can be trained to discriminate between gestures belonging to different ones of the gesture classes 501-510.

FIG. 6 and FIG. 7 illustrate 2-D intensity plots of the time-resolved values. It is not required in all scenarios that such 2-D positional time spectrograms are used as input samples for the ML model. For instance, 1-D time-resolved values of the respective kinematic observables may be used as input samples to the ML model (as shown, e.g., in FIG. 4). Such 1-D dependencies may be found by plotting the maximum value in the respective positional time spectrogram for each time step.

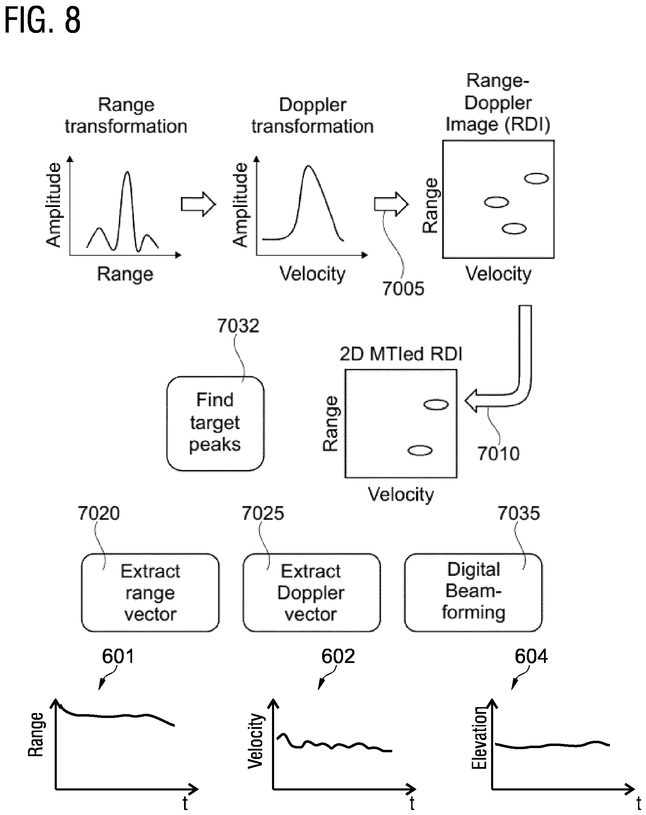

FIG. 8 illustrates pre-processing of radar measurement data (e.g., a sequence of multiple data frames) to obtain time-resolved values for various kinematic observables, here range 601, velocity 602, and elevation 604. At 7005, at least a part of the RDI of each data frame is determined. This can include a 2D windowing of each data frame and a 2-D FFT along the fast-time in slow-time dimension. Then, at 7010, to reduce the impact of static background objects, a moving target indication (MTI), e.g., in the form of an exponentially weighted moving average filter may be applied to the RDI. At 7032, one or more target peaks be extracted from at least a portion the RDI. Each target peak corresponds to an associated object. Sometimes, only the primary object - e.g., having the highest signature in the RDI - may be selected. In other scenarios, multiple objects may be selected. Thus, at 7032, a transition from scene-based processing to processing associated with individual objects is performed. For each object, a range and a Doppler vector can be extracted, 7020, 7025. Thus, time-resolved values for range and velocity can be obtained. Digital beamforming is executed at box 7035, to determine azimuthal and elevation time-resolved values for each of the one or more objects selected at 7032.

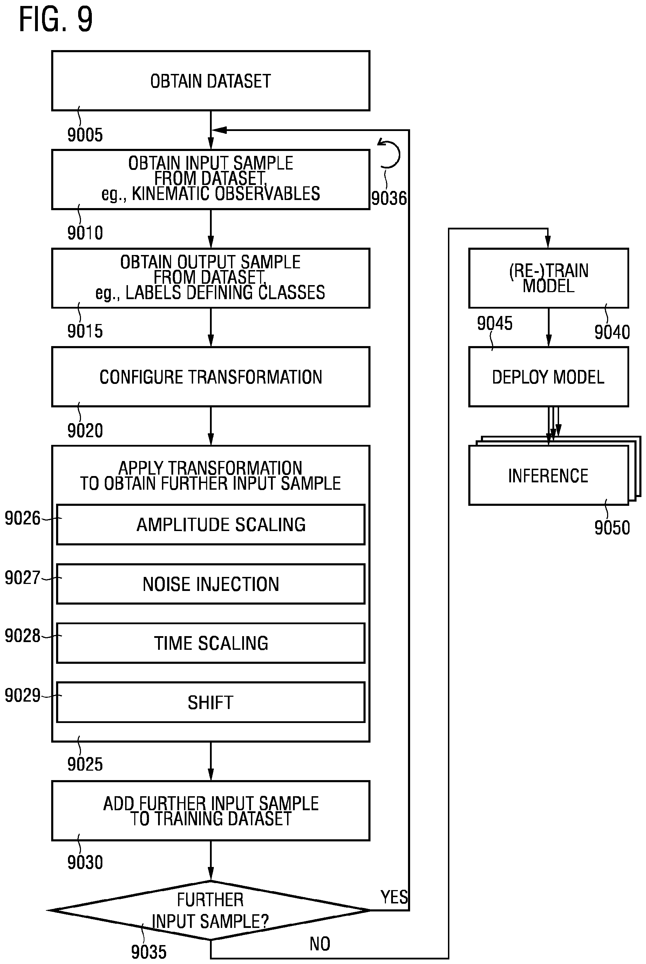

The pre-processing illustrated in FIG. 8 is generally known to the skilled person such that details need not to be explained herein. Furthermore, variants of such preprocessing are known in the art and may be applied to the techniques disclosed herein. Various techniques are known that enable to transition from scene-based processing based on the data frames obtained from the radar sensor to object-based processing of one or more observables associated with a spatial configuration of each of one or more objects. Thereby, input samples including one or more sets of time resolved values of one or more observables are obtained that can be provided to the ML model. Also, data augmentation based on such object-level input samples can be executed, to populate a training dataset. Respective data-augmentation techniques are illustrated in connection with FIG. 9.

FIG. 9 is a flowchart of a method according to various examples. The method of FIG. 9 may be executed by a processing device. More specifically, the method of FIG. 9 may be executed by a processor upon loading and executing program code from a memory. For instance, the method of FIG. 9 may be executed by the processor 62 of the processing device 60 (cf. FIG. 1), upon loading program code from the memory 63 and upon executing the program code.

The method of FIG. 9 is associated with preparing and using an ML model for providing estimations based on radar measurement data. More specifically, the ML model provides estimations based on preprocessed radar measurement data. The ML model provides estimations based on input samples that each include one or more sets of time-resolved values for one or more observables associated with the spatial configuration of at least one object in a scene. Example observables have been discussed above, e.g., range 601, velocity 602, azimuthal angle 603, and elevation angle 604. Another possible observable would be magnitude.

At box 9005, it is optionally possible to obtain a predefined dataset. For instance, the predefined dataset may be loaded from a memory or a database. The predefined dataset may have been pre-populated, e.g., based on measurements taken in a lab or field test. It thus may be termed experimental dataset. The experimental dataset may be based on radar measurements. Input samples obtained from such measured data frames may have been preprocessed, e.g., using techniques as outlined above. Accordingly, each input samples and the predefined experimental dataset includes one or more sets of time resolved values of one or more kinematic observables. The experimental dataset also includes, for each input sample, and associated output sample including ground truth information. For instance, for a gesture class estimation, each output sample may include an indicator indicative of the associated gesture class. Ground truth information may be obtained from manual annotation processes. Ground truth information may also be obtained from alternative sensor data available in the test set up.

Then, at box 9010, and for each respective iteration 9036, a current source input sample is obtained, e.g., by selection from the experimental dataset. The source input sample may be randomly selected from the experimental dataset. It would also be possible to select the source input sample based on one or more selection criteria. For instance, it would be possible to determine positions of the input samples in the predefined training dataset obtained in box 9005 across the input space and then, at box 9010, select the source input sample based on the positions of the various input samples in the input space. Thereby, certain regions in the input space may be preferably considered. For instance, regions of the input space only sparsely sampled in the training data may be preferably considered.

It is optionally possible, at box 9015, to obtain an output sample that is associated with the source input sample obtained at the current iteration 9036 of box 9010. The output sample may be obtained from the training dataset, as well.

At box 9020, the transformation to be applied to at least one of the one or more sets of the time-resolved values of the one or more kinematic observables of the source input sample of the current iteration 9036 is optionally configured. Configuring the transformation may include selecting the particular transformation, e.g., from a predetermined group of transformations. Alternatively or additionally, one or more parameter values of one or more parameters of the transformation may be set.

For instance, the configuration of the transformation may be based on a deployment configuration of the radar sensor expected during inference (details will be explained in connection with box 9050). Configuration of the transformation can mean that the particular transformation to be applied is selected, e.g., from a predetermined group of transformations. Configuration of the transformation can, alternatively or additionally, include that a given transformation is parametrized based on, i.e., values of one or more parameters of the transformation are set

More specifically, it would be possible to consider a difference between the deployment configuration of the radar sensor used for acquiring the radar measurement data underlying the input sample selected that the current iteration 9036 on the one hand, and the deployment configuration of the radar sensor expected during inference on the other hand. For instance, such difference may be indicative of a difference in the distance between the radar sensor and the region in which a gesture to be classified is executed by the user. Alternatively or additionally, such difference may be indicative of a difference in the noise level expected, e.g., due to electromagnetic disturbances etc. Alternatively or additionally, such difference may be indicative of a difference in the orientation of the radar sensor. Alternatively or additionally, such difference may be indicative of a difference in the path loss of radar signals in between the radar sensor and the region in which a gesture to be classified as executed by the user.

The configuration applied at box 9020 can - alternatively or additionally to the dependencies disclosed above - depend on the output label, as optionally obtained at box 9015. For instance, for different gesture classes, different types of transformation may be used. For instance, certain gesture classes may be invariant to certain differences in the deployment configuration, while the time-resolved values for other gesture classes may show a significant dependency on such differences in the deployment configuration.

Box 9020 is optional. Sometimes, the transformation may be pre-configured.

At box 9025, an augmented input sample is generated based on the source input sample of the current iteration 9036. This is done through applying the transformation. The transformation is applied over a time interval of at least one of the one or more sets of the time-resolved values of the current source input sample. This alters the time-resolved values at least within the time interval.

For instance, the time interval over which the transformation is applied can equate to the gesture time interval. For this, a preceding gesture detection algorithm may be executed in order to determine/estimate the gesture time interval, i.e., its start time and end time. Such gesture detection algorithm may not be capable to determine the estimate of the gesture class; it may only be able to detect that a gesture is being observed. As a general rule, the time interval over which the transformation is applied can also be larger than the gesture time interval. For instance, a certain offset may be applied before and/or after the gesture time interval.

It is noted that - depending on the one or more operations included in the transformation - the time interval can also change. For instance, in a time-scaling operation, the time interval is extended or compressed. I.e., the time-resolved values included in the time interval of the source input sample are stretched or compressed into a further time interval of the augmented input sample.

Various transformations are conceivable. Example transformations include an amplitude-scaling operation, box 9026; a noise-injection operation, box 9027; a time-scaling operation, box 9028; and a shifting operation, box 9029.

For instance, the particular box or boxes to be executed amongst 9026-9029 may be selected at box 9020 when configuring the transformation. For instance, parameters such as the strength of the amplitude scaling, the strength of the noise injection, the strength of the time-scaling or the strength of the shifting may be configured at box 9020, when parameterizing the transformation.

Next, some example details with respect to the various types of transformations and the associated data-manipulation operations are discussed. These examples can be combined with each other, to form further examples.

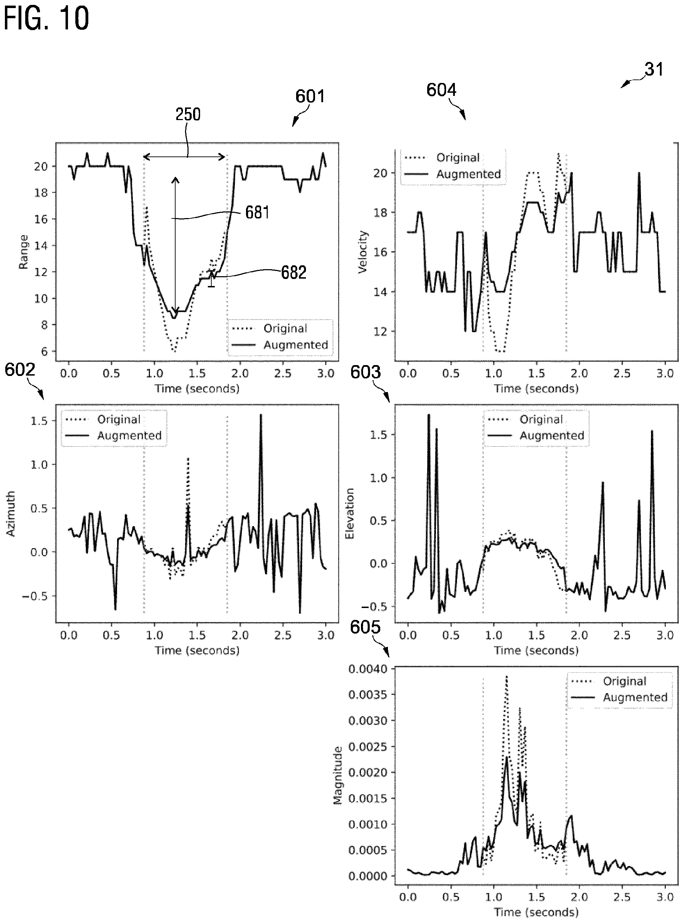

FIG. 10 schematically illustrates aspects with respect to the amplitude-scaling operation 31. Illustrated are the sets of time-resolved values for the kinematic observables range 601, velocity 602, elevation angle 604, azimuthal angle 603, and magnitude 605 included in the source input sample (full lines); also illustrated are the respective sets of time-resolved values generated through applying the amplitude-scaling operation 31 (dashed lines). As can be seen from FIG. 10, by means of the amplitude-scaling operation, the prominence of peak features in the time-resolved values can be enhanced.

In the scenario FIG. 10, the scaling factors smaller than 1, e.g., roughly 0.9. Thus, the prominence of peaks is reduced. On the other hand, in some scenarios it is possible to configure the transformation such that a scaling factor for the amplitude-scaling operation is used that is larger than 1 so that the prominence of peaks is enhanced. For instance, the particular scaling factor of the amplitude-scaling operation may depend on the expected size of the object that performs an action in the field of view of the radar sensor. This, in turn, typically depends on the distance between the radar sensor in the deployment configuration and the area in which the action is performed.

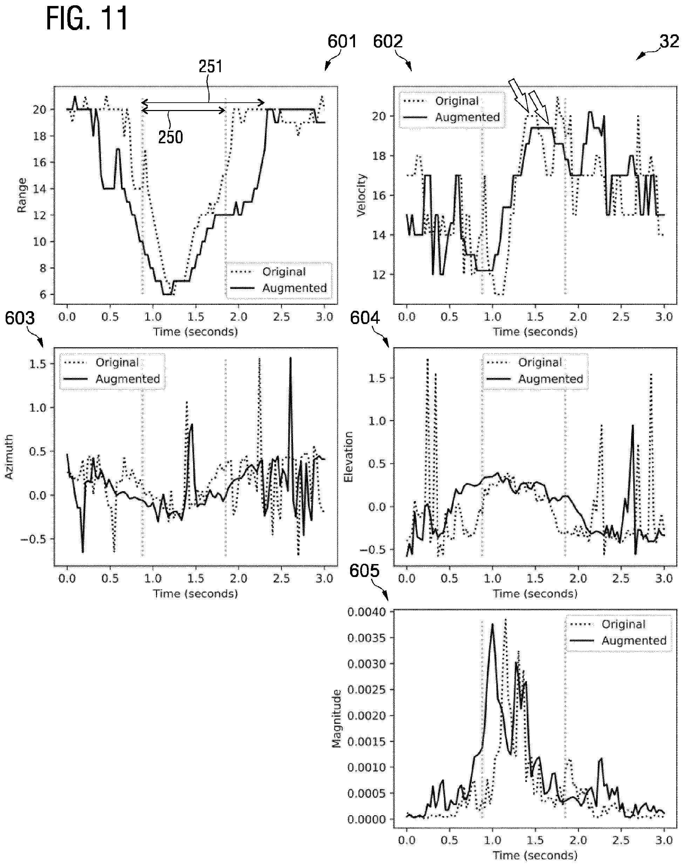

FIG. 11 corresponds to FIG. 10 but illustrates the time-scaling operation 32. The time-scaling operation 32 expands or compresses certain features of the time resolved values, to thereby mimic a variation in the speed of an action executed by the object. For example, in the scenario FIG. 11 a time-scaling factor of larger than 1 is selected so that certain features, e.g., peaks, are expanded. Similarly, it would be possible to select a time-scaling factor that is smaller than 1, to thereby compress features or patterns captured by the time resolved values. To be able to expound or compress patterns captured by the time-resolved values, interpolation techniques can be employed. Time resolved values can be duplicated or removed.

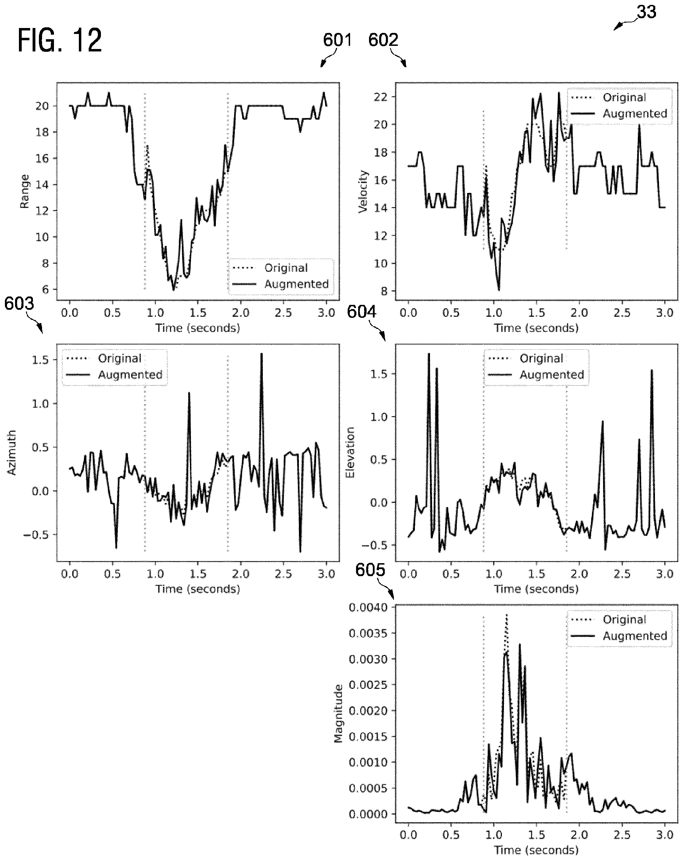

FIG. 12 corresponds to FIG. 10 but illustrates the noise-injection operation 33. By means of the noise-injection operation the 33, it is possible to add varying degrees of noise, e.g., Gaussian noise. Thereby, effects of clutter/environmental noise such as originating from secondary reflections from surrounding obstacles can be introduced into the time resolved values of the one or more kinematic observables. In the scenario of FIG. 12, noise is added, e.g., by a factor of 2.5. Various noise amplification factors can be chosen in order to tailor the strength of the noise-injection operation. The respective configuration of the transformation may depend on the deployment configuration expected for the radar sensor during inference.

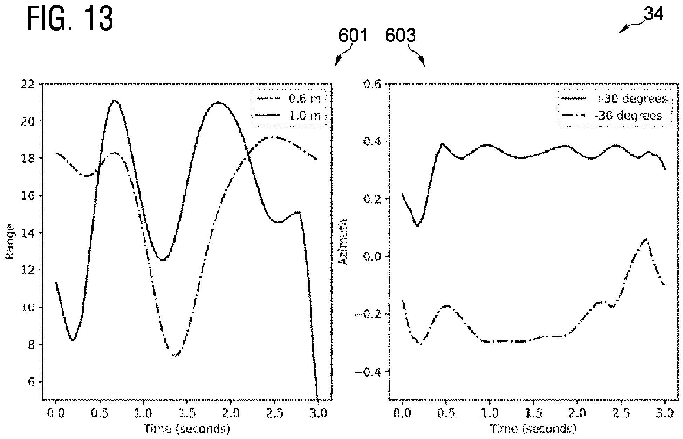

FIG. 13 corresponds to FIG. 10 but illustrates the shift operation 34. By means of the shift operation, it is possible to map time resolved values associated with a given baseline - e.g., due to a certain mounting distance between the radar sensor and the area in which the gesture is performed and/or due to a certain mounting orientation of the radar sensor and the area in which the gesture is performed - to another range of values.

While separate operations 31-34 had been previously discussed in connection with FIG. 10, FIG. 11, FIG. 12, and FIG. 13, as a general rule, these operations can be combined with each other in the context of a given transformation. For instance, it would be possible to combine the time-scaling operation 32 with the amplitude-scaling operation 31. This is illustrated in FIG. 11 for the velocity 602, marked by the two arrows. Here, the time-scaling operation 32 expands the double peak pattern and the amplitude-scaling operation 31 reduces the amplitude of the double peak pattern.

Referring again to FIG. 9, at box 9030, the augmented input samples then added to a training dataset. That training dataset may or may not include the pairs of input-output samples of the experimental training dataset of box 9005.

At box 9035, it is determined whether a further iteration 9036 is required. If a further iteration 9036 is not required, the method may optionally commence at box 9040.

At box 9040, an ML model is trained taking into account the training dataset that has been populated by one or more of the iterations 9036 of box 9030. The training at box 9040 can be a fine-tuning training of a pre-trained ML model. For instance, the ML model may have been pre-trained based on the initial experimental dataset (box 9005) from which the input samples are obtained at one or more iterations 9036 of box 9010; then, the fine-tuning training may be based on the training dataset which has been populated in the one or more iterations 9036 of box 9030. The training dataset may, in some examples, additionally include at least some of the pairs of input-output samples of the original experimental dataset of box 9005. It would, however, also be possible that the training dataset does not include any of the pairs of input-output samples of the experimental dataset of box 9005.

When fine-tuning weights of the ML model, the weights are initialized by an initial training. Then, during the fine-tuning training, the weights are further adjusted, starting from those values obtained through the initial training. This is different to an initial training where the weights are typically instantiated prior to executing the initial training using a randomized process. Fine-tuning may also include adding a parallel processing branch to the original model with weights set in the fine-tuning training; in this case, the original weights of the original model can remain unaltered.

Upon completing the training at box 9040, it is then optionally possible to deploy the ML model, box 9045. The ML model may be deployed to multiple agents in the field. Each of these agents may employ a radar sensor characterized by the same deployment configuration, e.g., defined by the overall system integration.

Then, at box 9050, the ML model may be inferred at each of the agents. The radar sensor, at this time, has been integrated into a larger system, e.g., a vehicle dashboard, a display, etc. Thus, a particular deployment configuration is observed.

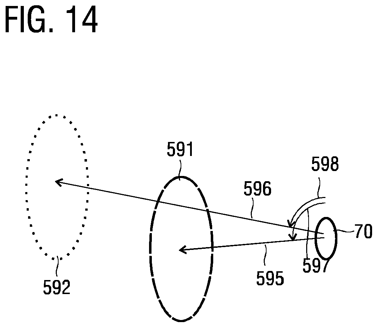

Inference at box 9050 is based on the (re-)training of the ML model executed at box 9040; this (re-)training, in turn, is based on a tailored training data set that has been populated in one or more of the iterations 9036 of box 9030. Accordingly, any offset or difference in the input samples captured by the initial training data set obtained at box 9005 (e.g., populated by measurements) and the input samples experienced at box 9050, can be compensated for. Any differences in the deployment configuration underlying the measurements used to populate the initial training data set obtained at box 9005 and the deployment configuration encountered during inference at box 9050 can be compensated for. This is also illustrated in FIG. 14.

FIG. 14 also a variation of the deployment configuration so that the gesture at box 9050 in FIG. 9 is executed in a region 592 which has a different distance 596 and different orientation 598 with respect to the radar sensor 70 if compared to the region 591 associated with the radar measurements used to populate the initial training dataset obtained at box 9005 of FIG. 9.

To be able to train, retrain or specifically fine-tune the ML model, it is possible to create synthetic pairs of input-output samples using the techniques disclosed herein. The pairs of input-output samples can be customized and generalized depending on the requested deployment scenario. This enables to improve the accuracy of the estimation provided by the ML model. Input samples available for the region 591 can be altered to obtain further input samples for the region 592, by using a respective transformation. Next, specific examples with respect to the transformation will be explained.

For example, it would be possible to determine one or more characteristics features of the one or more sets of time resolved values in a given source input sample (cf. Box 9010 in FIG .9). Then, the transformation may depend on one or more such characteristics features. The transformation may be accordingly configured, cf. FIG. 9: box 9020. This means that the transformation can be adjusted for a given source input sample or collection of source input samples having certain properties. Thus, instead of using a fixed transformation, the transformation can be tailored to properties of the source input samples that are being transformed. Such a technique generally enables to more realistically synthesize augmented input samples, i.e., more realistically mimic input samples encountered during inference. By taking into account, e.g., a shape, amplitude, or fingerprint pattern of the time-resolved values of a given source input sample, the associated augmented input sample can accurately mimic any input sample observed during inference.

For instance, a range variation 681 (illustrated in FIG. 10) observed during the gesture time interval 250 for a given gesture is typically proportional to the amplitude of the gesture performed. For instance, a more pronounced hand gesture (such as "waving") can have a larger range variation 681 if compared to a less pronounced finger gesture (e.g., "swipe" gesture).

It has been observed that the scaling factor to be applied by the scaling operation 31 may depend on the amplitude of the gesture. More generally, a strength of the transformation can depend on the amplitude of the gesture. Thereby, nonlinear dependencies may be captured.

As a general rule, it would be possible that the one or more characteristics features are determined based on feature recognition executed on the one or more sets of the time-resolved values. Accordingly, in other words, it would be possible to inspect the source input sample or more specifically the one or more sets of the time-resolved values, thereby extracting the one or more characteristics. In this scenario, auxiliary information is not required. However, in some scenarios it may be possible that the one or characteristic features are at least partially determined based on ground-truth information associated with the respective source input sample. Such ground truth information may be available in the respective training dataset that included the source input sample (cf. FIG. 9: box 9005); but may not be available later-on during inference. Sometimes, measurement setups used for populating a training dataset include additional sensors that are not available during inference, e.g., additional cameras, additional radar sensors, etc., e.g., at different mounting positions. Such additional sensor circuitry may be used to obtain the ground truth information. Then, once the one or characteristic features are known, the transformation can be executed. For instance, gestures having a small range variation 681 - "weak" gestures - may be amplified more significantly if compared to gestures having a strong range variation 681. Such nonlinear dependencies are sometimes observed in measurements. Capturing the nonlinear dependencies helps to more realistically augment the source input sample, resulting in a better quality of the training and a higher accuracy of the ML model.

Another characteristic feature is the noise level of a least one of the one or more sets of time resolved values. The noise level 682 is plotted in the form an error bar dimensioned in accordance the standard deviation of the noise-inflicted values in FIG. 10, for the range 601. For instance, for a relatively small noise level, the noise-injection operation 33 may be activated; while for a relatively large noise level, the noise-injection operation 33 may be deactivated. In a further example, it would be possible to statistically sample the time resolved values in accordance with the noise level and then apply the transformation to such statistic samples of the time-resolved values (instead of directly to the time-resolved values). By statistically sampling in accordance with the noise level, more realistic results are obtained if compared to reference implementation in which the scaling operation etc. is applied to the actual time-resolved values without any sampling.

Yet another class of characteristic features is associated with the time-domain properties of the at least one set of time-resolved values. Specifically, it would be possible to determine the gesture time interval 250. Then, the duration of the gesture time interval 250 may be considered when configuring the transformation. For example, for a longer (shorter) gesture time interval 250, the amplitude scaling factor applied to the values of the velocity 602 when applying an amplitude-scaling operation 31 may be larger (smaller). Sometimes, multiple types of transformations may be coupled with each other. For instance, when applying a time-scaling operation to the velocity, the gesture time interval is changed. This is illustrated in FIG. 11 for the velocity 602 where the gesture time interval 250 corresponds to the source input sample and the gesture time interval 251 corresponds to the augmented input sample. The amplitude of the velocity 602 also decreases, i.e., the time-scaling operation is combined with the amplitude-scaling operation 31 (marked by the arrows in FIG. 11). I.e., in the illustrated scenario, the amplitude-scaling operation depends on the time-scaling factor of the time-scaling operation as well as on the gesture time interval 250.

In yet a further example, the altering of the time-resolved values is limited to the gesture time interval 250 (irrespective of its duration). For instance, the amplitude-scaling operation 31 is only executed within the gesture time interval 250, as shown in FIG. 10. For this, knowledge of the gesture time interval 250 is required.

Summarizing, techniques have been disclosed which enable customization of training datasets based on data augmentation. Training datasets can be populated based on altering values of one or more observables associated with spatial configuration of an object in a scene. This reduces the time required for collection of measurement data and/or the time required for annotation.

A training dataset used for training a machine-learning model can include pairs of input-output samples, wherein at least some of these input samples are synthetic input samples obtained from data augmentation.

Further summarizing, at least the following EXAMPLES have been disclosed.

EXAMPLE 1.A computer-implemented method of populating a training dataset for training a machine-learning model to provide estimations associated with at least one object, wherein the method comprises:
- obtaining a predetermined input sample comprising one or more sets of time-resolved values for one or more observables of the at least one object, each set of the time-resolved values being determined based on radar measurement data acquired by a radar sensor for a scene comprising the at least one object, each observable being associated with a spatial configuration of the at least one object,
- generating a further input sample based on the predetermined input sample through applying a transformation over a time interval of at least one of the one or more sets of the time-resolved values of the predetermined input sample, thereby altering the respective time-resolved values over the time interval, and
- adding the further input sample to the training dataset.

EXAMPLE 2. The method of EXAMPLE 1,
wherein the transformation is selected from a predetermined group of transformations and/or is parameterized based on a deployment configuration of the radar sensor.

EXAMPLE 3. The method of EXAMPLE 1 or 2, further comprising:
- determining one or more characteristic features of the one or more sets of the time-resolved values,
wherein the transformation depends on the one or more characteristic features.

EXAMPLE 4. The method of EXAMPLE 3,
wherein the one or more characteristic features specify at least one of a shape, amplitude or fingerprint pattern of at least one of the one or more sets of the time-resolved values.

EXAMPLE 5. The method of EXAMPLE 3 or 4,
wherein the one or more characteristic features are determined based on feature recognition executed on the one or more sets of the time-resolved values.

EXAMPLE 6. The method of any one of EXAMPLEs 3 to 5,
wherein the one or more characteristic features are determined based on ground-truth information associated with the predetermined input sample.

EXAMPLE 7. The method of any one of EXAMPLEs 3 to 6,
wherein the one or more characteristic features comprise at least one of a duration of an action performed by the at least one object or a time interval during which an action is performed by the at least one object.

EXAMPLE 8. The method of any one of EXAMPLEs 3 to 7,
wherein the one or more characteristic features comprise an amplitude of an action performed by the at least one object.

EXAMPLE 9. The method of any one of EXAMPLEs 3 to 8,
wherein the one or more characteristic features comprise a noise level of at least one of the one or more sets of time-resolved values.

EXAMPLE 10. The method of EXAMPLE 9,
wherein applying the transformation comprises statistically sampling the at least one of the one or more sets of the time-resolved values across the time interval in accordance with the noise level.

EXAMPLE 11. The method of any one of EXAMPLEs 3 to 10,
wherein a strength of the transformation depends on the one or more characteristic features.

EXAMPLE 12. The method of any one of the preceding EXAMPLEs,
wherein the transformation depends on an output label associated with the input sample.

EXAMPLE 13. The method of any one of the preceding EXAMPLEs,
wherein the one or more observables are selected from the group comprising: range of each of the at least one object; velocity of each of the at least one object; azimuth position of each of the at least one object; elevation position of each object of the at least one object; signal magnitude associated with each of the at least one object.

EXAMPLE 14. The method of any one of the preceding EXAMPLEs,
wherein the transformation comprises one or more selected among the group of: an amplitude-scaling operation; a noise-injection operation; a time-scaling operation; and a shifting operation.

EXAMPLE 15. The method of any one of the preceding EXAMPLEs, further comprising:
- based on at least one of the one or more sets of time-resolved values: determining a duration of an action performed by the at least one object,

wherein the transformation comprises a time-scaling operation and an amplitude-scaling operation,
wherein the amplitude-scaling operation depends on a time-scaling factor of the time-scaling operation and further depends on the duration.

EXAMPLE 16. The method of any one of the preceding EXAMPLEs,
wherein the transformation comprises an amplitude-scaling operation,
wherein the amplitude-scaling operation applies a scaling factor to reference values statistically sampled within a distribution aligned with the time-resolved values, the distribution depending on a noise level of the at least one of the sets of time-resolved values.

EXAMPLE 17. The method of any one of the preceding EXAMPLEs,
wherein the predetermined input sample is obtained from the training dataset or from another training dataset.

EXAMPLE 18. The method of any one of the preceding EXAMPLEs, further comprising:
- training (9040) the machine-learning model based on the training dataset.

EXAMPLE 19. The method of EXAMPLE 18,
wherein said training of the machine-learning model is a fine-tuning training of the machine-learning model.

EXAMPLE 20. The method of EXAMPLE 18 or 19,
- upon completing said training, deploying the machine-learning model.

EXAMPLE 21. The method of any one of the preceding EXAMPLEs,
wherein the estimations are gesture class estimations.

EXAMPLE 22. A training dataset for training a machine-learning model to provide class estimations associated with at least one object, the training dataset being populated based on the method of any one of the preceding EXAMPLEs.

EXAMPLE 23. A computing device comprising computing circuitry configured to perform the method of any one of EXAMPLEs 1 to 21.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, various examples have been disclosed in connection with a estimation task solved by the ML model in the context of gesture class estimation. However, other types of estimation tests can also be subject to the techniques disclosed herein, e.g., people counting, vital sign monitoring, etc. Beyond classification tasks, it is also possible that regression tasks benefit from the techniques disclosed herein.

## Claims

1. A computer-implemented method of populating a training dataset for training a machine-learning model to provide estimations associated with at least one object, wherein the method comprises:
- obtaining (9005) a predetermined input sample comprising one or more sets of time-resolved values for one or more observables (601, 602, 603, 604, 605) of the at least one object (81, 82, 83), each set of the time-resolved values being determined based on radar measurement data acquired by a radar sensor (70) for a scene (80) comprising the at least one object (81, 82, 83), each observable (601, 602, 603, 604, 605) being associated with a spatial configuration of the at least one object (81, 82, 83),
- generating (9025) a further input sample based on the predetermined input sample through applying a transformation (31, 32, 33, 34) over a time interval (250, 251) of at least one of the one or more sets of the time-resolved values of the predetermined input sample, thereby altering the respective time-resolved values over the time interval (250, 251), and
- adding (9030) the further input sample to the training dataset.

2. The method of claim 1,
wherein the transformation (31, 32, 33, 34) is selected from a predetermined group of transformations and/or is parameterized based on a deployment configuration of the radar sensor.

3. The method of claim 1 or 2, further comprising:
- determining one or more characteristic features of the one or more sets of the time-resolved values,
wherein the transformation (31, 32, 33, 34) depends on the one or more characteristic features.

4. The method of claim 3,
wherein the one or more characteristic features specify at least one of a shape, amplitude or fingerprint pattern of at least one of the one or more sets of the time-resolved values.

5. The method of claim 3 or 4,
wherein the one or more characteristic features are determined based on feature recognition executed on the one or more sets of the time-resolved values.

6. The method of any one of claims 3 to 5,
wherein the one or more characteristic features are determined based on ground-truth information associated with the predetermined input sample.

7. The method of any one of claims 3 to 6,
wherein the one or more characteristic features comprise at least one of a duration of an action performed by the at least one object or a time interval during which an action is performed by the at least one object.

8. The method of any one of claims 3 to 7,
wherein the one or more characteristic features comprise at least one of an amplitude of an action performed by the at least one object, or a noise level of at least one of the one or more sets of time-resolved values.

9. The method of claim 8,
wherein applying the transformation (31, 32, 33, 34) comprises statistically sampling the at least one of the one or more sets of the time-resolved values across the time interval (250, 251) in accordance with the noise level.

10. The method of any one of claims 3 to 9,
wherein a strength of the transformation (31, 32, 33, 34) depends on the one or more characteristic features.

11. The method of any one of the preceding claims,
wherein the transformation (31, 32, 33, 34) depends on an output label associated with the input sample.

12. The method of any one of the preceding claims,
wherein the one or more observables (601, 602, 603, 604, 605) are selected from the group comprising: range (601) of each of the at least one object; velocity (602) of each of the at least one object; azimuth position (603) of each of the at least one object; elevation (604) position of each object of the at least one object; signal magnitude (605) associated with each of the at least one object.

13. The method of any one of the preceding claims,
wherein the transformation (31, 32, 33, 34) comprises one or more selected among the group of: an amplitude-scaling operation (31); a noise-injection operation (33); a time-scaling operation (32); and a shifting operation (34).

14. The method of any one of the preceding claims, further comprising:
- based on at least one of the one or more sets of time-resolved values:
determining a duration of an action performed by the at least one object,
wherein the transformation comprises a time-scaling operation and an amplitude-scaling operation,
wherein the amplitude-scaling operation depends on a time-scaling factor of the time-scaling operation and further depends on the duration.

15. The method of any one of the preceding claims,
wherein the transformation comprises an amplitude-scaling operation,
wherein the amplitude-scaling operation applies a scaling factor to reference values statistically sampled within a distribution aligned with the time-resolved values, the distribution depending on a noise level of the at least one of the sets of time-resolved values.
